# EUROPÄISCHE PATENTSCHRIFT

(11) **EP 3 878 724 B1**
(45) Veröffentlichungstag und Bekanntmachung des Hinweises auf die Patenterteilung: **16.08.2023**
(21) Anmeldenummer: 20162586.0
(22) Anmeldetag: 12.03.2020
(51) Int. Cl.: B62J 43/13, B62J 43/20, B62K 19/40, B62M 6/90, H01M 50/24, H01M 50/249, H01M 50/262

(54) **ELEKTROFAHRRAD-AKKUHALTERUNGSENSEMBLE**
ELECTRIC BICYCLE BATTERY HOLDER ENSEMBLE
ENSEMBLE DE SUPPORT DE BATTERIE POUR BICYCLETTE ÉLECTRIQUE

(43) Veröffentlichungstag der Anmeldung: 15.09.2021
(73) Patentinhaber: SRAM, LLC, Chicago, IL 60607 (US)
(72) Erfinder: Hemsing, Axel, 41460 Neuss (DE); Plikat, Tobias, 41460 Neuss (DE)
(74) Vertreter: terpatent Patentanwälte ter Smitten Eberlein-Van Hoof Rütten Daubert

(56) Entgegenhaltungen:
- CN-U- 202 464 077
- CN-U- 203 832 691
- DE-A1-102015 010 603
- DE-A1-102017 005 434
- US-A1- 2012 145 852

## Beschreibung

Die Erfindung bezieht sich auf ein Elektrofahrrad-Akkuhalterungsensemble zum werkzeugfreien Einsetzen eines Traktionsakkumulators an oder in einen Elektrofahrrad-Rahmenabschnitt mit einer Schwenkbewegung in Verriegelungsrichtung bzw. zum werkzeugfreien Entnehmen des Traktionsakkumulators von oder aus dem Elektrofahrrad-Rahmenabschnitt mit einer Schwenkbewegung in Entnahmerichtung.

Unter einem Elektrofahrrad sind vorliegend alle Mehrräder, insbesondere Zweiräder oder Dreiräder, zu verstehen, die einen elektrischen Traktionsakkumulator aufweisen, der bedarfsweise von einem Rahmenabschnitt des Elektrofahrrads abgenommen werden kann, beispielsweise, um den Traktionsakkumulator räumlich getrennt von dem Elektrofahrrad aufladen und/oder diebstahlsicher unterbringen zu können.

Hierzu weist das Elektrofahrrad ein Akkuhalterungsensemble auf, das es erlaubt, den Traktionsakkumulator mit wenigen Handgriffen und insbesondere werkzeugfrei von dem Elektrofahrrad-Rahmenabschnitt zu entfernen. Unter "werkzeugfrei" ist vorliegend zu verstehen, dass hierzu kein Werkzeug erforderlich ist, das beispielsweise mehrere Umdrehungen zum Lösen oder Fixieren einer Schraube u.ä. ausführen muss. Selbstverständlich kann zum Entnehmen bzw. zum Einsetzen des Traktionsakkumulators beispielsweise ein Schloss und ein Schlüssel vorgesehen sein, um beispielsweise einen Diebstahlschutz darzustellen.

Aus DE 10 2018 006689 A1, DE 10 2019 100 673 A1 und DE 10 2017 005 434 A1 sind jeweils Elektrofahrrad-Akkuhalterungsensembles zum werkzeugfreien Einsetzen bzw. Entnehmen eines Traktionsakkumulators bekannt, wobei der Traktionsakkumulator durch eine Schwenkbewegung in das Akkuhalterungsensemble eingesetzt bzw. aus diesem entnommen wird. Hierzu ist eine Schwenkgelenk-Halteanordnung an einem Längsende des Traktionsakkumulators vorgesehen, das im Folgenden das Schwenk-Längsende genannt wird. An dem anderen Längsende des Traktionsakkumulators ist eine Verriegelungs-Halteanordnung vorgesehen, die der Verriegelung bzw. Entriegelung des Traktionsakkumulators in dem Akkuhalterungsensemble dient.

Die Schwenkgelenk-Halteanordnung weist an dem traktionsakku-seitigen Akkugelenkmodul eine konkave Ausnehmung auf, in die eine korrespondierende konvexe Ausstülpung des rahmenfesten Rahmengelenkmoduls eingreift, sodass auf diese Weise beim Entnehmen bzw. Verriegeln der Traktionsakkumulator eine Schwenkbewegung um das auf diese Weise gebildete Schwenkgelenk ausführt.

Die Entnahmerichtung, in der der Traktionsakkumulator von der Schwenkgelenk-Halteanordnung entnommen wird, kann beispielsweise nach oben gerichtet sein, sodass der Traktionsakkumulator beispielsweise aus einer entsprechenden Ausnehmung des Elektrofahrrad-Rahmenabschnitts nach oben entnommen werden kann. Beim Einsetzen des Traktionsakkumulators in die Schwenkgelenk-Halteanordnung von oben ist eine relativ einfache Kontrollierbarkeit des Einsetzvorgangs gegeben. Allerdings wird bei immer mehr Elektrofahrrädern eine Entnahme nach unten bzw. ein Einsetzen des Traktionsakkumulators von unten in die Schwenkgelenk-Halteanordnung realisiert, um mehr Freiheiten bei der Rahmenkonstruktion und/oder um ein eleganteres Erscheinungsbild des betreffenden Elektrofahrrad-Rahmenabschnitts bieten zu können. Hierbei ist die visuelle Kontrolle beim Einsetzen bzw. Einfädeln des Akkugelenksmoduls in das rahmenfeste Rahmengelenkmodul erheblich erschwert.

Die DE 2019 100 673 A1 offenbart an dem Rahmengelenkmodul eine konvexe Ausstülpung, in die eine konkave Ausnehmung des Akkugelenkmoduls eingefädelt werden muss. Da der Traktionsakkumulator beim Einsetzen nur von der Seite aus sichtbar ist, muss das Einsetzen der Ausnehmung in die Ausstülpung praktisch blind erfolgen.

Die gattungsgemäße CN 202 464 077 U offenbart eine Schwenkgelenk-Halteanordnung, die ein seitliches Herausschwenken des Traktionsakkumulators erlaubt.

DE 10 2015 010 603 A1, CN 203 832 691 U und US 2012/145852 A1 offenbaren ebenfalls Akkuhalterungsensembles, die eine Werkzeuglose Entnahme beziehungsweise ein werkzeugloses Einsetzen des Traktionsakkumulators mit Hilfe eines Schwenkgelenks offenbaren.

Aufgabe der Erfindung vor diesem Hintergrund ist es, ein Elektrofahrrad-Akkuhalterungsensemble zu schaffen, das eine verbesserte visuelle Kontrolle des Einsetzens des Traktionsakkumulators in die Schwenkgelenk-Halteanordnung erlaubt.

Diese Aufgabe wird erfindungsgemäß gelöst mit einem Elektrofahrrad-Akkuhalterungsensemble mit den Merkmalen des Anspruchs 1.

Das erfindungsgemäße Elektrofahrrad-Akkuhalterungsensemble zum werkzeugfreien Einsetzen des Traktionsakkumulators an bzw. in einen Elektrofahrrad-Rahmenabschnitt mit einer Schwenkbewegung weist einen entsprechenden Elektrofahrrad-Rahmenabschnitt, einen Traktionsakkumulator sowie eine Schwenkgelenk-Halteanordnung an einem Längsende des Traktionsakkumulators und eine Verriegelungs-Halteanordnung an dem anderen Längsende des Traktionsakkumulators auf. In dem am Elektrofahrrad-Rahmenabschnitt verriegelten Zustand kann der Traktionsakkumulator außen auf den betreffenden Rahmenabschnitt aufgesetzt sein, kann jedoch auch quasi unsichtbar in einer entsprechenden Ausnehmung innerhalb des betreffenden Rahmenabschnitts vollständig versenkt sein. Das Einsetzen des Traktionsakkumulators in die rahmenseitige Halteanordnung kann grundsätzlich von oben, von der Seite oder von unten erfolgen.

Das Akkuhalterungsensemble weist eine Schwenkgelenk-Halteanordnung an dem Schwenk-Längsende des Traktionsakkumulators und eine Verriegelungs-Halteanordnung an dem Verriegelungs-Längsende des Traktionsakkumulators auf. Jede Halteanordnung besteht jeweils aus zwei Modulen, nämlich einem rahmenseitigen bzw. rahmenfesten Modul und einem akkuseitigen Modul. Die Schwenkgelenk-Halteanordnung wird von einem rahmenfesten Rahmengelenkmodul und von einem traktionsakku-seitigen Akkugelenkmodul gebildet.

Das Akkugelenkmodul weist einen konvexen Teilzylinderkörper und das Rahmengelenkmodul weist einen korrespondierenden konkaven Teilhohlzylinder auf, in den der Teilzylinderkörper annähernd spielfrei eingreift. Die Zylinderachse des Teilzylinderkörpers bzw. des Teilhohlzylinders bildet die Schwenkachse der Schwenkgelenk-Halteanordnung. Der Teilzylinderkörper und der Teilhohlzylinder sind an der der Entnahmerichtung zugewandten Seite des Traktionsakkumulators bzw. des Rahmenabschnitts angeordnet. Unter einem Teilzylinderkörper bzw. einem Teilhohlzylinder ist vorliegend eine räumliche Form zu verstehen, die im Wesentlichen jedoch nicht notwendigerweise vollständig zylindrisch ausgebildet ist. In jedem Fall sind der Teilzylinderkörper und der korrespondierende Teilhohlzylinder so ausgebildet, dass jedenfalls die finale Schwenkbewegung des Traktionsakkumulators um eine praktisch starre Schwenkachse erfolgt, die Schwenkachse sich also während der finalen Schwenkbewegung nicht wesentlich verändert. Hierzu ist insbesondere der Teilzylinderkörper über seine Funktionsfläche im Wesentlichen zylindrisch ausgebildet, wohingegen der Teilhohlzylinder ebenfalls zylindrisch ausgebildet ist. Alternativ kann der Teilhohlzylinder aber auch von mehreren kleinen ebenen Flächen gebildet sein, die die Wirkung eines Teilhohlzylinders haben, allerdings dabei den Nachteil höherer Flächenpressungen in Kauf nehmen.

Durch die Anordnung des konvexen Teilzylinderkörpers an der betreffenden Stirnseite des Traktionsakkumulators ist die visuelle Kontrolle beim Einfädeln des akkuseitigen Teilzylinderkörpers in den rahmenseitigen konkaven Teilhohlzylinder erheblich verbessert. Der konvexe Teilzylinderkörper, der aus der Grundebene der betreffenden Stirnseite des Traktionsakkumulators axial hervorragt, ist auch von der Seite aus sichtbar, sodass das Einfädeln auch von der Seite aus visuell einfach kontrolliert werden kann. Dies ist insbesondere bei einer Einsetz- und Verriegelungsbewegung bzw. Verriegelungsrichtung von unten nach oben besonders hilfreich, bei der die Sichtbarkeit auf das rahmenseitige Rahmengelenkmodul schon durch die schlechten Lichtverhältnisse erheblich behindert und von oben aus sogar ausgeschlossen ist. Die Sichtbarkeit des konvexen Teilzylinderkörpers kann noch durch entsprechende Farbwahl einer hellen und kontrastierenden Farbe des Teilzylinderkörpers verbessert werden.

Der Teilzylinderkörper und der Teilhohlzylinder sind an der der Akku-Entnahmerichtung zugewandten Seite des Traktionsakkumulators beziehungsweise des betreffenden Elektrofahrrad-Rahmenabschnitts angeordnet. Im Falle einer Unterbringung des Traktionsakkumulators innerhalb des Rahmenabschnitts sind der Teilzylinderkörper und der Teilhohlzylinder also möglichst nah an der betreffenden Öffnung des Rahmenabschnitts angeordnet. Auch durch diese Maßnahme wird die Sichtbarkeit des akkuseitigen Teilzylinderkörpers beim Einsetzen bzw. Einfädeln in den Teilhohlzylinder möglichst lange sichergestellt. Der Teilzylinderkörper ist nah, und besonders bevorzugt unmittelbar an dem der Entnahmerichtung zugewandten Seitenrand der Schwenk-Stirnseite des Traktionsakkumulators angeordnet. Unter einer nahen Anordnung ist eine Entfernung des Teilzylinderkörpers von dem Seitenrand von maximal wenigen Millimetern, insbesondere von höchstens 5 mm zu verstehen.

Das Rahmengelenkmodul ist an dem Elektrofahrrad-Rahmenabschnitt durch eine Fixieranordnung dauerhaft fixiert. Die Zylinderachse und die Fixierebene der Fixieranordnung sind, in einer Richtung quer zur Längsachse des Traktionsakkumulators, weniger als 15 mm, bevorzugt weniger als 10 mm voneinander beabstandet. Die Zylinderachse und die Fixierebene der Fixieranordnung sind nur gering oder gar nicht zueinander versetzt angeordnet. Wenn der Traktionsakkumulator in der Akkuhalterung verriegelt ist, werden relativ hohe Klemmkräfte in Längsrichtung des Traktionsakkumulators erzeugt. Da der Abstand zwischen der Fixierebene der Fixieranordnung und der Zylinderachse klein ist, ist auch der hiermit identische Hebelarm für die Krafteinleitung der in Längsrichtung wirkenden Einspannkraft kurz bzw. gleich Null, sodass die strukturelle Stabilität des Akkuhalterungsensembles hoch ist.

Der Traktionsakkumulator weist eine der Entnahmerichtung zugewandte distale Seitenwand auf. Vorzugsweise geht der Teilzylinderkörper stufenlos bzw. sprungfrei in diese Seitenwand über. Die zylindrische Oberfläche des Teilzylinderkörpers mündet also tangentenstetig in die ebene distale Seitenwand des Traktionsakkumulators. Auf diese Weise ist der Teilzylinderkörper so nah wie technisch möglich an der betreffenden distalen Seitenwand angeordnet. Hierdurch sind für den Schwenkvorgang weder akkuseitig noch rahmenseitig besondere Freischnitte erforderlich.

Ferner ist hierdurch die konstruktiv bestmögliche Sichtbarkeit des Teilzylinderkörpers realisiert.

Gemäß einer bevorzugten Ausgestaltung der Erfindung ist der Teilhohlzylinder starr an dem Rahmengelenkmodul vorgesehen und ist hinterschneidungsfrei ausgebildet. Der Teilhohlzylinder beschreibt also einen Teilzylinder von maximal 180°, besonders bevorzugt von 175°-150°, was einem Schwenkwinkel von 5°-30° entspricht. Der Schwenkwinkel beschreibt den Winkel, unter dem das Einfädeln des Traktionsakkumulators bzw. des Teilzylinderkörpers initial in das Rahmengelenkmodul bzw. in den konkaven Teilhohlzylinder maximal erfolgen kann.

Gemäß einer bevorzugten Ausgestaltung ist der Teilhohlzylinder an mindestens einem Hohlzylinder-Längsende offen ausgebildet, sodass eine Teilzylinderkörper-Endfläche des in den Teilhohlzylinder eingesetzten Teilzylinderkörpers seitlich unverdeckt ist, also seitlich sichtbar ist. Hierdurch wird die Sichtbarkeit insbesondere beim Einfädeln und die Kontrollierbarkeit des bereits in den Teilhohlzylinder eingefädelten Teilzylinderkörpers erheblich verbessert bzw. überhaupt erst ermöglicht.

Vorzugsweise weist die Schwenkgelenk-Halteanordnung eine elektrische Steckeranordnung auf, die von einem traktionsakku-seitigen Kontaktstecker mit mehreren elektrischen Kontaktelementen und einem hierzu korrespondierenden und komplementären rahmenfesten Gegenkontaktstecker mit mehreren elektrischen Gegenkontaktelementen gebildet wird. Die Kontaktebene der Kontaktelemente und der Gegenkontaktelemente liegt ungefähr in einer radialen Längsebene in Bezug auf die Zylinderachse des Teilzylinderkörpers bzw. des Teilhohlzylinders. Hierdurch wird eine exakt tangentiale Kontaktierungs-Bewegung der Kontaktelemente und der Gegenkontaktelemente zueinander realisiert.

Besonders bevorzugt ist vorgesehen, dass der radiale Abstand zwischen der Zylinderachse und dem nächstliegenden Kontaktelement bzw. Gegenkontaktelement mindestens 30 mm, insbesondere mindestens 35 mm beträgt. Besonders bevorzugt beträgt der radiale Abstand abzüglich des halben Zylinderdurchmessers des Teilzylinderkörpers mindestens 30 mm, und insbesondere mindestens 35 mm. Je größer der Abstand der Kontaktelemente bzw. der Gegenkontaktelemente zur Zylinderachse ist, desto weniger ist die Tangentiale der Steckbewegung geneigt zur Längsrichtung des Traktionsakkumulators zu Beginn der elektrischen Kontaktierung der Kontaktelemente mit den Gegenkontaktelementen.

Auf diese Weise können die Kontaktelemente bzw. die Gegenkontaktelemente weitgehend geradlinig und axial zusammengesteckt werden, wodurch grundsätzlich eine bessere elektrische Kontaktierung sichergestellt werden kann. Ferner können die Kontaktelemente und die Gegenkontaktelemente exakt in Längsrichtung ausgerichtet werden, wodurch Bauraum eingespart wird.

Ein großer radialer Abstand zwischen der Zylinderachse und dem nächstliegenden Kontaktelement bzw. Gegenkontaktelement wird konstruktiv durch die randseitige Anordnung des Teilzylinderkörpers unmittelbar an dem Seitenrand der Schwenk-Stirnseite des Traktionsakkumulators erst ermöglicht. Denn ein Teilhohlzylinder kann nicht unmittelbar randseitig angeordnet werden, weil der Teilhohlzylinder eine Seitenwand erfordert, die den Teilhohlzylinder bildet. Je schmaler diese Seitenwand wäre, desto eher stellt sie ein Verletzungsrisiko dar und desto leichter könnte sie abgebrochen oder verbogen werden.

Vorzugsweise ist an der Gelenk-Stirnseite des Traktionsakkumulators radial zwischen dem Kontaktstecker und dem Teilzylinderkörper eine elektrische Anzeige angeordnet. Die elektrische Anzeige kann beispielsweise den elektrischen Ladezustand des Traktionsakkumulators anzeigen.

Gemäß einer bevorzugten Ausgestaltung weist der Teilzylinderkörper eine Rippenstruktur auf. Die Rippen können insbesondere in einer Zylinder-Querebene stehen. Durch die Rippenstruktur wird ein aus Kunststoff spritzgegossener Teilzylinderkörper formtreu und präzise hergestellt, da insbesondere eine Materialausdehnung nach dem Spritzgießen hierfür in den Rippen-Zwischenräumen Platz findet. Auf diese Weise kann ein annähernd spielfreies und gleichzeitig klemmfreies Ineinandergreifen des Teilzylinderkörpers und des Teilhohlzylinders sichergestellt werden.

Vorzugsweise weist die Schwenkgelenk-Halteanordnung eine Lateralführung auf, die von einer Führungszunge und einer korrespondierenden Führungsnut gebildet ist, deren Grundebenen in einer Querebene zur Zylinderachse liegen. Die Führungszunge kann beispielsweise an dem Rahmengelenkmodul und die korrespondierende Führungsnut an dem Akkugelenkmodul vorgesehen sein. Es können auch zwei Lateralführungen vorgesehen sein.

Durch die auf diese Weise gebildete laterale Führung wird der Traktionsakkumulator über den Schwenkbereich und in der Verriegelungsposition lateral geführt. Dies ist insbesondere dann von großer Wichtigkeit, wenn der Teilhohlzylinder seitlich offen ausgebildet ist, also selbst keine laterale Führungsaufgabe übernimmt.

Im Folgenden werden zwei Ausführungsbeispiele der Erfindung anhand der Zeichnungen näher erläutert. Es zeigen:
Figur 1 schematisch einen Elektrofahrrad-Rahmenabschnitt mit einem Akkuhalterungsensemble, das im Wesentlichen aus einer Verriegelungs-Halteanordnung an einem Längsende und einer Schwenkgelenk-Halteanordnung an dem anderen Längsende des Traktionsakkumulators besteht, wobei der Traktionsakkumulator nach unten von dem Elektrofahrrad-Rahmenabschnitt entnommen bzw. in den Rahmenabschnitt eingesetzt wird,
Figur 2 eine perspektivische Ansicht eines Akkugelenkmoduls der Schwenkgelenk-Halteanordnung der Figur 1,
Figur 3 eine perspektivische Ansicht eines Rahmengelenkmoduls der Schwenkgelenk-Halteanordnung der Figur 1,
Figur 4 einen Längsschnitt der Schwenkgelenk-Halteanordnung der Figur 1,
Figur 5 eine perspektivische Ansicht der Schwenkgelenk-Halteanordnung der Figur 4, und
Figur 6 einen Längsschnitt einer Schwenkgelenk-Halteanordnung einer zweiten Ausführungsform, bei der der Traktionsakkumulator nach oben aus dem Elektrofahrrad-Rahmenabschnitt entnommen bzw. in den Rahmenabschnitt eingesetzt wird.

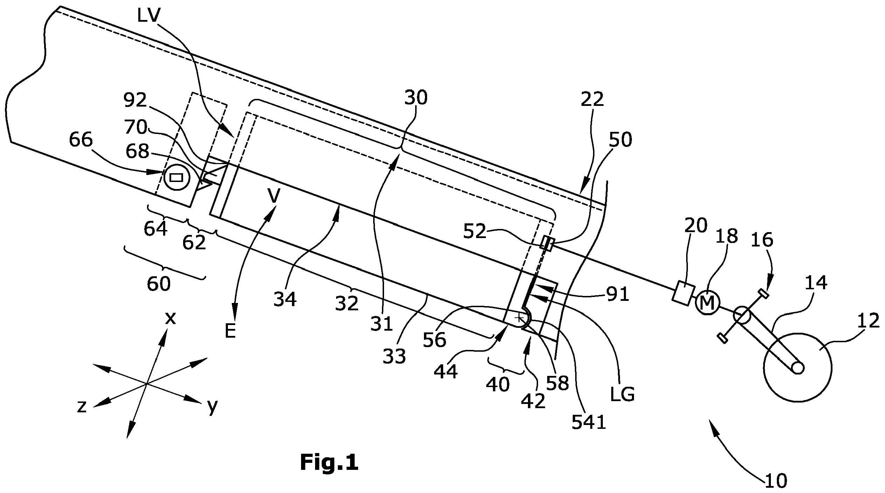

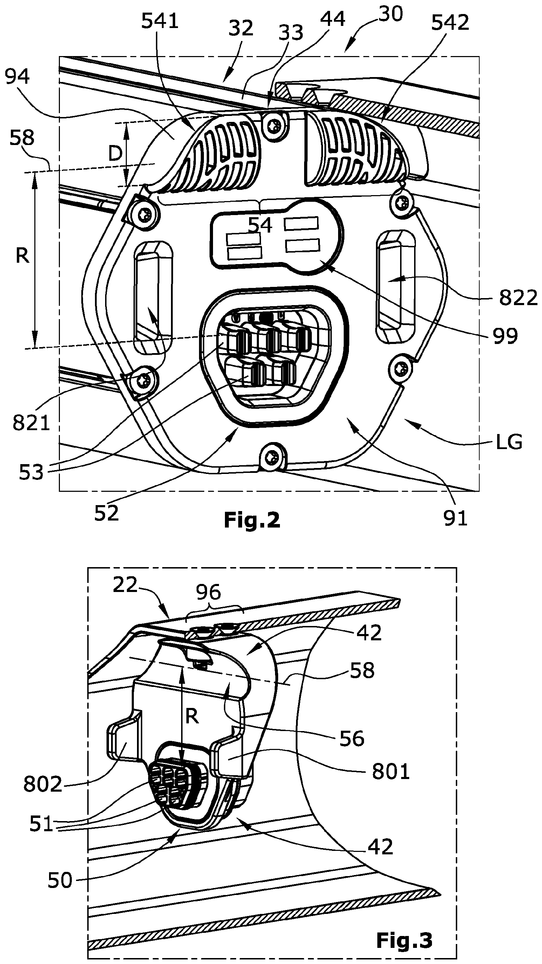

In der Figur 1 ist schematisch ein Elektrofahrrad 10 dargestellt, das beispielsweise als sogenanntes Pedelec ausgebildet sein kann. Das Elektrofahrrad 10 weist einen Fahrradrahmen auf, von dem vorliegend nur ein Rahmenabschnitt 22 gezeigt ist, beispielsweise ein Rahmenabschnitt 22, der eine steife Traverse oder einen Teil davon zwischen dem Lenkerrohr und dem Sattelrohr des Fahrradrahmens bildet. Der Rahmenabschnitt 22 kann beispielsweise als im Querschnitt rechteckiges Hohlprofil ausgebildet sein, das eine nach unten orientierte Akku-Einstecköffnung 34 aufweist, durch die hindurch der Traktionsakkumulator 30 aus dem Rahmenabschnitt 22 entnommen bzw. in den Rahmenabschnitt 22 eingesetzt werden kann. In den beiden vorliegenden Ausführungsbeispielen ist der Rahmenabschnitt 22,220 jeweils gleichseitig sechsseitig ausgebildet, wie in der Figur 2 erkennbar ist.

Das Elektrofahrrad 10 weist ein angetriebenes Antriebsrad 12 auf, beispielsweise das Hinterrad des Fahrrads 10. Das Antriebsrad 12 wird über eine Antriebskette 14 von einer Tretkurbel 16 angetrieben. Die Tretkurbel 16 wird ferner bedarfsweise zusätzlich durch einen elektrischen Traktionsmotor 18 angetrieben, der durch eine Antriebssteuerung 20 mit elektrischer Energie versorgt wird. Die Antriebssteuerung 20 erhält die elektrische Traktions-Energie von einem Traktionsakkumulator 30, der in seiner verriegelten Gebrauchsposition in einer nach unten öffnenden Akkuaufnahme-Ausnehmung 31 in dem Rahmenabschnitt 22 untergebracht ist.

Der Traktionsakkumulator 30 wird von einer Schwenkgelenk-Halteanordnung 40 an der einen Stirnseite 91 bzw. dem einen Längsende LG - des Traktionsakkumulators 30 und von einer Verriegelungs-Halteanordnung 60 an der anderen Stirnseite 92 bzw. dem anderen Längsende LV des Traktionsakkumulators 30 werkzeuglos entnehmbar gehalten. Die beiden Stirnseiten 91,92 des Traktionsakkumulators 30 bilden die jeweiligen Längsenden LG, LV des Traktionsakkumulators 30.

Die Längsachse Y des Traktionsakkumulators 30 ist die Längsachse zwischen den beiden Längsenden LV,LG bzw. zwischen den beiden Stirnseiten des Traktionsakkumulators 30. Die Entnahmeachse X entspricht der initialen Bewegungsrichtung des Traktionsakkumulators 30 beim Entnehmen aus der Akku-Ausnehmung 31 in einer Entnahmerichtung E bzw. der finalen Bewegungsrichtung beim Einsetzen des Traktionsakkumulators 30 in die Akku-Ausnehmung 31 in Verriegelungsrichtung V. Die Querachse Z ist die dritte Raumachse, die senkrecht zur Längsachse Y und senkrecht zur Entnahmeachse X orientiert ist.

Die Verriegelungs-Halteanordnung 60 an dem der Schwenkgelenk-Halteanordnung 40 gegenüberliegenden Längsende des Traktionsakkumulators 30 weist ein rahmenseitiges Rahmenhaltemodul 64 und ein traktionsakku-seitiges Akkuhaltemodul 62 auf, das mit dem Rahmenhaltemodul 64 in der Figur 1 in der Verriegelungsposition dargestellt ist. Die Schwenkgelenk-Halteranordnung 40 wird von einem rahmenfesten Rahmengelenkmodul 42 und von einem traktionsakku-seitigen Akkugelenkmodul 44 gebildet.

Der Traktionsakkumulator 30 besteht aus einem langgestreckten Batteriemodul 32 mit einem gleichseitig sechseckigen Querschnitt, wobei an dem Schwenk-Längsende LG des Batteriemoduls 32 das Akkugelenkmodul 44 und an dem Verriegelungs-Längsende LV das Akkuhaltemodul 62 dauerhaft befestigt ist.

Das Schwenkgelenk wird von zwei exakt axial zueinander ausgerichteten Teilzylinderkörpern 541,542 an dem Akkugelenkmodul 44 und einem hierzu korrespondierenden konkaven Teilhohlzylinder 56 an dem Rahmengelenkmodul 42 gebildet. Die gemeinsame Zylinderachse 58 der beiden Teilzylinderkörper 541,542 bzw. des Teilhohlzylinders 56 bildet die Schwenkachse der auf diese Weise gebildeten Schwenkgelenk-Halteranordnung 40. Der Zylinderdurchmesser D der beiden Teilzylinderkörper 541,542 beträgt ungefähr 10 mm. Die beiden Teilzylinderkörper 541,542 weisen jeweils eine Rippenstruktur auf, wobei die Rippen in einer Querebene zur Zylinderachse 58 angeordnet sind.

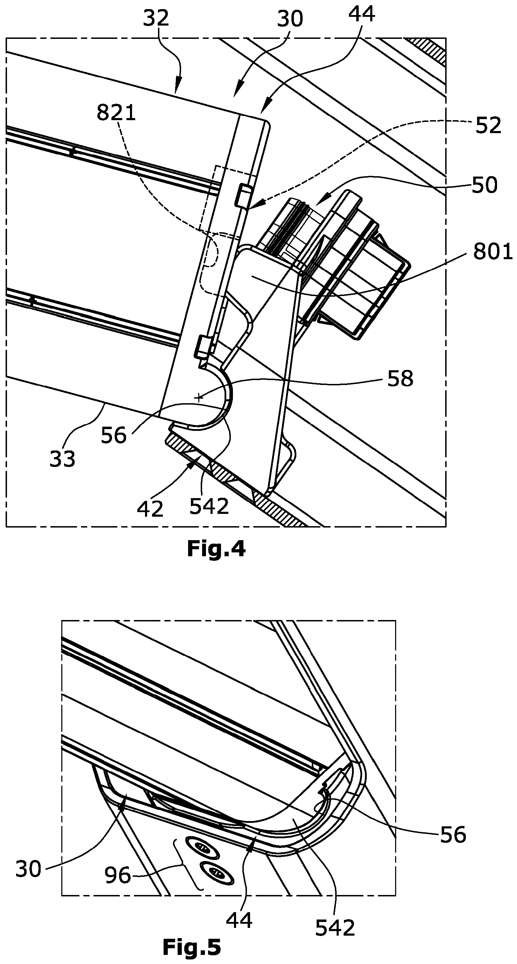

Der Teilhohlzylinder 56 ist an seinen beiden Hohlzylinder-Längsenden offen ausgebildet, so dass die beiden Teilzylinder-Endflächen 54 der in den Teilhohlzylinder 56 eingesetzten Teilzylinderkörper 541,542 seitlich unverdeckt sind, wie beispielsweise in den Figuren 4, 5 sowie 6 zu erkennen ist.

Unter einem Teilzylinder bzw. Teilhohlzylinder ist vorliegend stets ein Zylinder mit einem Sektorwinkel von maximal 180 ° zu verstehen. Im vorliegenden Fall beträgt der Sektorwinkel des Teilhohlzylinders ca. 160°, sodass der Traktionsakkumulator 30 in einem Einsetzwinkel von maximal 20° im Verhältnis zur Längsachse des Traktionsakkumulators 30 in seiner in der Figur 1 dargestellten Verriegelungsposition eingefädelt werden kann. Der Sektorwinkel der beiden Teilzylinderkörper 541,542 beträgt dagegen annähernd 180°.

Wie in der Figur 2 erkennbar ist, sind die beiden Teilzylinderkörper 541,542 an der der Entnahmerichtung E zugewandten Seite des Traktionsakkumulators 30 bzw. des Rahmenabschnitts 22 angeordnet. Insbesondere sind die beiden Teilzylinderkörper 541,542 abstandslos und unmittelbar angrenzend an dem der Entnahmerichtung E zugewandten Seitenrand der Schwenk-Stirnseite des Traktionsakkumulators 30 angeordnet. Der vorgenannte Seitenrand bildet den Übergang zwischen der betreffenden Stirnseite 91 und der der Entnahmerichtung zugewandten distalen Seitenwand 33 des Traktionsakkumulators 30. Die beiden Teilzylinderkörper 541,542 gehen stufenlos in die distale Seitenwand 33 über.

An dem Schwenk-Längsende LG weist die Schwenkgelenk-Halteranordnung 40 eine elektrische Steckeranordnung auf, die von einem traktionsakku-seitigen Kontaktstecker 52 mit mehreren elektrischen Kontaktelementen 53 und einem hierzu korrespondierenden und hierzu komplementären rahmenfesten Gegenkontaktstecker 50 mit mehreren korrespondierenden elektrischen Gegenkontaktelementen 51 gebildet wird. Die Kontaktebene der Kontaktelemente 53 und der Gegenkontaktelemente 51 liegt ungefähr in einer Längsebene in Bezug auf die Zylinderachse 58, wobei diese Längsebene ungefähr senkrecht zur Traktionsakkumulator-Längsachse steht. Der radiale Abstand R zwischen der Zylinderachse 58 und dem nächstliegenden Kontaktelement 53 bzw. dem nächstliegenden Gegenkontaktelement 51 sollte möglichst groß sein, und beträgt vorliegend ca. 40 mm.

Zwischen dem Kontaktstecker 52 und dem Teilzylinderkörper 541,542 ist eine elektrische Anzeige 99 angeordnet, die den Ladezustand des Traktionsakkumulators 30 anzeigt.

Die Schwenkgelenk-Halteanordnung 40 weist ferner eine Lateralführung auf, die von zwei seitlich an dem rahmenseitigen Rahmengelenkmodul 42 angeordneten Führungszungen 801,802 und zwei hierzu korrespondierenden Führungsnuten 821,822 an dem Akkugelenkmodul 44 gebildet wird, deren Grundebenen in einer Querebene zur Zylinderachse 58 liegen. Die Steckeranordnung und die elektrische Anzeige 99 sind zwischen den beiden Führungszungen 801,802 bzw. den beiden Führungsnuten 821,822 angeordnet.

Das rahmenseitige Rahmengelenkmodul 42 ist durch eine Fixieranordnung 96 an dem Elektrofahrrad-Rahmenabschnitt befestigt, wie in Figur 3 dargestellt ist. Im vorliegenden Ausführungsbeispiel besteht die Fixieranordnung 96 aus zwei Schraubverbindungen, mit denen das Rahmengelenkmodul 42 an dem betreffenden Wandabschnitt des betreffenden Rahmenabschnitts 22 fixiert ist. Wie in den Figuren 3 und 4 erkennbar ist, beträgt der Abstand der Zylinderachse 58 und der Fixierebene der Fixieranordnung 96 in einer Richtung quer zur Längsachse des Traktionsakkumulators 30 vorliegend ungefähr den halben Zylinderdurchmesser 10mm/2 zzgl. ca 2 mm, also vorliegend ungefähr insgesamt 7 mm. Hierdurch wird ein relativ kleiner Hebelarm in Bezug auf Längskräfte realisiert, die durch die Schwenkgelenk-Halteanordnung 40 auf den Rahmenabschnitt 22 übertragen werden.

Die Verriegelungs-Halteranordnung 60 weist an dem Rahmenhaltemodul 64 ein Entriegelungs-Schloss 66 auf, durch dessen Betätigung mit einem passenden Entriegelungs-Schlüssel ein beweglicher Verriegelungs-Riegel 68 aus einer Verriegelungsposition in eine Entriegelungsposition verschoben werden kann. Der Verriegelungsriegel 68 hintergreift in der Verriegelungsposition einen starren akkuseitigen Riegelkörper 70, der Teil des Akkuhaltemoduls 62 ist.

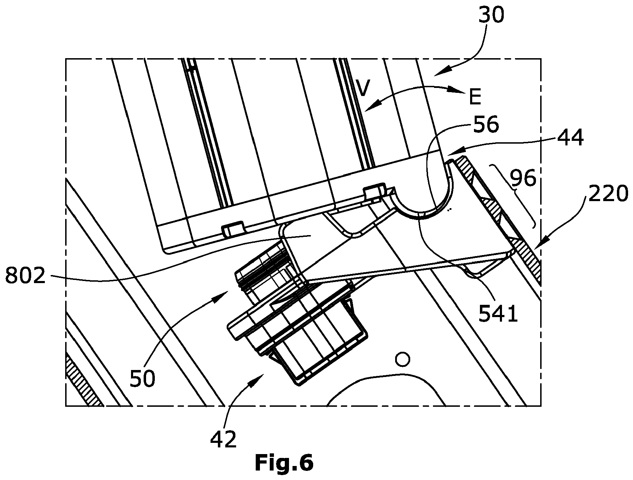

Das in der Figur 6 dargestellte Ausführungsbeispiel unterscheidet sich lediglich in dem Elektrofahrrad-Rahmenabschnitt 220 von dem des Ausführungsbeispiels der Figuren 1-5. Der Elektrofahrrad-Rahmenabschnitt 220 des in der Figur 6 dargestellten Ausführungsbeispiels ist nach oben geöffnet, sodass die Entnahme des Traktionsakkumulators 30 aus dem Rahmenabschnitt 220 von unten nach oben bzw. das Einsetzen von oben nach unten erfolgt. Die Entnahmerichtung E ist also nach oben orientiert, wohingegen die Verriegelungsrichtung V nach unten gerichtet ist.

## Patentansprüche

1. Elektrofahrrad-Akkuhalterungsensemble zum werkzeugfreien Einsetzen eines Traktionsakkumulators (30) an einen Elektrofahrrad-Rahmenabschnitt (22) mit einer Schwenkbewegung in Verriegelungsrichtung (V) bzw. zum werkzeugfreien Entnehmen des Traktionsakkumulators (30) von dem Elektrofahrrad-Rahmenabschnitt (22) mit einer Schwenkbewegung in Entnahmerichtung (E), wobei der Traktionsakkumulator (30) an seinen beiden Längsenden (LG,LV) zwei voneinander abgewandte Stirnseiten (91,92) aufweist, mit
einer Schwenkgelenk-Halteanordnung (40) an dem Schwenk-Längsende (LG) des Traktionsakkumulators (30) und einer Verriegelungs-Halteanordnung (60) an dem Verriegelungs-Längsende (LV) des Traktionsakkumulators (30),
wobei die Schwenkgelenk-Halteanordnung (40) von einem rahmenfesten Rahmengelenkmodul (42) und von einem traktionsakku-seitigen Akkugelenkmodul (44) gebildet wird,
wobei das Akkugelenkmodul (44) einen konvexen Teilzylinderkörper (541,542) und das Rahmengelenkmodul (42) einen korrespondierenden konkaven Teilhohlzylinder (56) aufweist, in den der Teilzylinderkörper (541,542) annähernd spielfrei eingreift, wobei die Zylinderachse (58) des Teilzylinderkörpers (541,542) bzw. des Teilhohlzylinders (56) die Schwenkachse der Schwenkgelenk-Halteanordnung (40) bildet,
wobei der Teilzylinderkörper (541,542) und der Teilhohlzylinder (56) an der der Entnahmerichtung (E) zugewandten Seite des Traktionsakkumulators (30) bzw. des Rahmenabschnitts (22) angeordnet ist, und
wobei das Rahmengelenkmodul (42) an dem Elektrofahrrad-Rahmenabschnitt (22) durch eine Fixieranordnung (96) fixiert ist,
**dadurch gekennzeichnet, dass**
die Zylinderachse (58) und die Fixierebene der Fixieranordnung (96) in einer Richtung quer zur Längsachse des Traktionsakkumulators (30) weniger als 15 mm voneinander beabstandet sind.

2. Elektrofahrrad-Akkuhalterungsensemble nach Anspruch 1, wobei der Teilzylinderkörper (541,542) an dem der Entnahmerichtung (E) zugewandten Seitenrand der Schwenk-Stirnseite (91) des Traktionsakkumulators (30) angeordnet ist.

3. Elektrofahrrad-Akkuhalterungsensemble nach einem der vorangegangenen Ansprüche, wobei der Traktionsakkumulator (30) eine der Entnahmerichtung (E) zugewandte distale Seitenwand (33) aufweist, und der Teilzylinderkörper (541,542) stufenlos in die distale Seitenwand (33) übergeht.

4. Elektrofahrrad-Akkuhalterungsensemble nach einem der vorangegangenen Ansprüche, wobei der Teilhohlzylinder (56) hinterschneidungsfrei ausgebildet ist.

5. Elektrofahrrad-Akkuhalterungsensemble nach einem der vorangegangenen Ansprüche, wobei die Schwenkgelenk-Halteanordnung (40) eine elektrische Steckeranordnung aufweist, die von einem traktionsakku-seitigen Kontaktstecker (52) mit mehreren elektrischen Kontaktelementen (53) und einem hierzu korrespondierenden und komplementären rahmenfesten Gegenkontaktstecker (50) mit mehreren elektrischen Gegenkontaktelementen (51) gebildet wird, wobei die Kontaktebene der Kontaktelemente (53) und der Gegenkontaktelemente (51) ungefähr in einer radialen Längsebene in Bezug auf die Zylinderachse (58) liegt.

6. Elektrofahrrad-Akkuhalterungsensemble nach Anspruch 5, wobei der radiale Abstand (R) zwischen der Zylinderachse (58) und dem nächstliegenden Kontaktelement (53) bzw. Gegenkontaktelement (51) mindestens 30 mm, insbesondere mindestens 35 mm beträgt, und besonders bevorzugt der Abstand (R) abzüglich des halben Zylinderdurchmessers (D) des Teilzylinderkörpers (541,542) mindestens 30 mm, und insbesondere mindestens 35 mm beträgt.

7. Elektrofahrrad-Akkuhalterungsensemble nach Anspruch 5 oder 6, wobei an der Schwenk-Stirnseite (91) des Traktionsakkumulators (30) radial zwischen dem Kontaktstecker (52) und dem Teilzylinderkörper (541,542) eine elektrische Anzeige (99) angeordnet ist.

8. Elektrofahrrad-Akkuhalterungsensemble nach einem der vorangegangenen Ansprüche, wobei der Teilzylinderkörper (541,542) eine Rippenstruktur aufweist.

9. Elektrofahrrad-Akkuhalterungsensemble nach einem der vorangegangenen Ansprüche, wobei der Teilhohlzylinder (56) an den Hohlzylinder-Enden offen ausgebildet ist, sodass eine Teilzylinderkörper-Endfläche (94) des in den Teilhohlzylinder (56) eingesetzten Teilzylinderkörpers (541,542) seitlich unverdeckt ist.

10. Elektrofahrrad-Akkuhalterungsensemble nach einem der vorangegangenen Ansprüche, wobei die Schwenkgelenk-Halteanordnung (40) eine Lateralführung aufweist, die von einer Führungszunge (801,802) und einer korrespondierenden Führungsnut (821,822) gebildet wird, deren Grundebenen in einer Querebene zur Zylinderachse (58) liegen.

## Claims

1. Electric bicycle battery holder assembly for tool-free insertion of a traction accumulator (30) on an electric bicycle frame section (22) with a swivelling movement in the locking direction (V), or for tool-free removal of the traction accumulator (30) from the electric bicycle battery holder assembly (22) with a swivelling movement in the removal direction (E), wherein the traction accumulator (30) has two end faces (91, 92) facing away from each other at its two longitudinal ends (LG, LV), having
a pivot joint retaining arrangement (40) at the pivot longitudinal end (LG) of the traction accumulator (30) and a locking retaining arrangement (60) at the locking longitudinal end (LV) of the traction accumulator (30),
wherein the pivot joint retaining arrangement (40) is defined by a frame-fixed frame joint module (42) and by a traction accumulator-side accumulator joint module (44),
wherein the accumulator joint module (44) has a convex partial cylinder body (541, 542) and the frame joint module (42) has a corresponding concave partial hollow cylinder (56) in which the partial cylinder body (541, 542) engages substantially without play, wherein the cylinder axis (58) of the partial cylinder body (541, 542) or of the partial hollow cylinder (56) forms the pivot axis of the pivot joint retaining arrangement (40),
the partial cylinder body (541, 542) and the partial hollow cylinder (56) being arranged on the side of the traction accumulator (30) and of the frame section (22) facing the removal direction (E), and wherein the frame hinge module (42) is fixed to the electric bicycle battery holder assembly (22) by a fixing arrangement (96), **characterised in that**
the cylinder axis (58) and the fixing plane of the fixing arrangement (96) are spaced less than 15 mm apart in a direction transverse to the longitudinal axis of the traction accumulator (30).

2. Electric bicycle battery holder assembly according to claim 1, wherein the partial cylinder body (541,542) is arranged at the side edge of the pivot end face (91) of the traction accumulator (30) facing the removal direction (E).

3. Electric bicycle battery holder assembly according to one of the preceding claims, wherein the traction accumulator (30) has a distal side wall (33) facing the removal direction (E), and the partial cylinder body (541,542) transitions steplessly into the distal side wall (33).

4. Electric bicycle battery holder assembly according to one of the preceding claims, wherein the partial hollow cylinder (56) is formed without undercuts.

5. Electric bicycle battery holder assembly according to any one of the preceding claims, wherein the pivot joint holder assembly (40) comprises an electrical connector assembly, formed by a traction battery-side contact plug (52) having a plurality of electrical contact elements (53) and a corresponding and complementary frame-fixed counter-contact plug (50) having a plurality of electrical counter-contact elements (51), wherein the contact plane of the contact elements (53) and the counter-contact elements (51) lies approximately in a radial longitudinal plane with respect to the cylinder axis (58).

6. Electric bicycle battery holder assembly according to claim 5, wherein the radial distance (R) between the cylinder axis (58) and the nearest contact element (53) or counter-contact element (51) is at least 30 mm, in particular at least 35 mm, and particularly preferably the distance (R) minus half the cylinder diameter (D) of the partial cylinder body (541, 542) is at least 30 mm, and in particular at least 35 mm.

7. Electric bicycle battery holder assembly according to claim 5 or 6, wherein an electrical indicator (99) is arranged radially between the contact plug (52) and the partial cylinder body (541, 542) on the pivoting end face (91) of the traction accumulator (30).

8. Electric bicycle battery holder assembly according to one of the preceding claims, wherein the partial cylinder body (541,542) has a ribbed structure.

9. Electric bicycle battery holder assembly according to one of the preceding claims, wherein the partial hollow cylinder (56) is designed to be open at the hollow cylinder ends, so that a partial cylinder body end surface (94) of the partial cylinder body (541,542) inserted into the partial hollow cylinder (56) is laterally uncovered.

10. Electric bicycle battery holder assembly according to one of the preceding claims, wherein the pivot joint holder assembly (40) comprises a lateral guide defined by a guide tongue (801,802) and a corresponding guide groove (821,822), the base planes of which lie in a transverse plane to the cylinder axis (58).

## Revendications

1. Ensemble de support d'accumulateur de bicyclette électrique pour insérer sans outil un accumulateur de traction (30) sur une section de cadre de bicyclette électrique (22) avec un mouvement de pivotement dans la direction de verrouillage (V), respectivement. pour retirer sans outil l'accumulateur de traction (30) de la section de cadre de vélo électrique (22) avec un mouvement de pivotement dans la direction de retrait (E), l'accumulateur de traction (30) comportant à ses deux extrémités longitudinales (LG, LV) deux faces frontales (91, 92) opposées l'une à l'autre, avec
un dispositif de retenue d'articulation pivotante (40) à l'extrémité longitudinale pivotante (LG) de l'accumulateur de traction (30) et un dispositif de retenue de verrouillage (60) à l'extrémité longitudinale de verrouillage (LV) de l'accumulateur de traction (30),
le dispositif de retenue d'articulation pivotante (40) étant constitué par un module d'articulation de cadre (42) solidaire du cadre et par un module d'articulation d'accumulateur (44) côté accumulateur de traction,
le module d'articulation d'accumulateur (44) comportant un corps cylindrique partiel convexe (541, 542) et le module d'articulation de cadre (42) comportant un cylindre partiel concave correspondant (56), dans lequel le corps cylindrique partiel (541, 542) s'engage approximativement sans jeu, l'axe de cylindre (58) du corps cylindrique partiel (541, 542) ou du cylindre partiel concave (56) formant l'axe de pivotement du dispositif de retenue d'articulation pivotante (40),
le corps de cylindre partiel (541, 542) et le cylindre concave partiel (56) étant disposés sur le côté de l'accumulateur de traction (30) ou de la section de cadre (22) orienté vers la direction de retrait (E), et
le module d'articulation de cadre (42) étant fixé à la section de cadre de bicyclette électrique (22) par un arrangement de fixation (96), **caractérisé en ce que**
l'axe du cylindre (58) et le plan de fixation de l'arrangement de fixation (96) sont espacés de moins de 15 mm dans une direction transversale à l'axe longitudinal de l'accumulateur de traction (30).

2. Ensemble de support d'accumulateur de vélo électrique selon la revendication 1, dans lequel le corps cylindrique partiel (541, 542) est disposé sur le bord latéral, tourné vers la direction de retrait (E), de la face frontale pivotante (91) de l'accumulateur de traction (30).

3. Ensemble support d'accumulateur de vélo électrique selon l'une des revendications précédentes, dans lequel l'accumulateur de traction (30) comporte une paroi latérale distale (33) orientée vers la direction de retrait (E), et le corps cylindrique partiel (541, 542) se prolonge en continu dans la paroi latérale distale (33).

4. Ensemble support d'accumulateur de vélo électrique selon l'une des revendications précédentes, dans lequel le cylindre concave partiel (56) est réalisé sans contre-dépouille.

5. Ensemble support d'accumulateur de vélo électrique selon l'une des revendications précédentes, dans lequel le dispositif de retenue d'articulation pivotante (40) comporte un ensemble connecteur électrique, qui est composé d'un connecteur de contact (52) du côté de l'accumulateur de traction avec plusieurs éléments de contact électriques (53) et d'un connecteur de contre-contact (50) correspondant et complémentaire à celui-ci, solidaire du cadre, avec plusieurs éléments de contre-contact électriques (51), le plan des contacts des éléments de contact (53) et des éléments de contre-contact (51) étant situé approximativement dans un plan longitudinal radial par rapport à l'axe du cylindre (58).

6. Ensemble support d'accumulateur de vélo électrique selon la revendication 5, dans lequel la distance radiale (R) entre l'axe du cylindre (58) et l'élément de contact (53) ou l'élément de contre-contact (51) le plus proche est d'au moins 30 mm, en particulier d'au moins 35 mm, et de manière particulièrement préférée, la distance (R) moins le demi-diamètre de cylindre (D) du corps de cylindre partiel (541, 542) est d'au moins 30 mm, et en particulier d'au moins 35 mm.

7. Ensemble de support d'accumulateur de vélo électrique selon la revendication 5 ou 6, dans lequel un indicateur électrique (99) est disposé sur la face frontale pivotante (91) de l'accumulateur de traction (30) radialement entre le connecteur de contact (52) et le corps cylindrique partiel (541, 542).

8. Ensemble de support d'accumulateur de vélo électrique selon l'une des revendications précédentes, dans lequel le corps cylindrique partiel (541, 542) comporte une structure nervurée.

9. Ensemble de support d'accumulateur de vélo électrique selon l'une des revendications précédentes, dans lequel le cylindre concave partiel (56) est ouvert aux extrémités du cylindre concave, de sorte qu'une surface d'extrémité (94) du corps de cylindre partiel (541, 542) inséré dans le cylindre concave partiel (56) n'est pas couverte latéralement.

10. Ensemble de support d'accumulateur de vélo électrique selon l'une quelconque des revendications précédentes, dans lequel le dispositif de retenue d'articulation pivotante (40) comporte un guidage latéral constitué par une languette de guidage (801, 802) et une rainure de guidage correspondante (821, 822) dont les plans de base sont situés dans un plan transversal à l'axe du cylindre (58).
